# EUROPÄISCHE PATENTSCHRIFT

(11) **EP 2 485 933 B1**
(45) Veröffentlichungstag und Bekanntmachung des Hinweises auf die Patenterteilung: **05.03.2014**
(21) Anmeldenummer: 10767935.9
(22) Anmeldetag: 05.10.2010
(51) Int. Cl.: B60W 30/17, B60W 40/04, G08G 1/16, B60W 50/08, B60W 50/12

(54) **VERFAHREN UND VORRICHTUNG ZUM AUTOMATISCHEN BETREIBEN EINES FAHRZEUGS IN EINEM KEINE NUTZERAKTION ERFORDERNDEN AUTONOMEN FAHRBETRIEB**
METHOD AND DEVICE FOR AUTOMATICALLY OPERATING A VEHICLE IN AN AUTONOMOUS DRIVING MODE REQUIRING NO USER ACTION
PROCÉDÉ ET DISPOSITIF POUR FAIRE FONCTIONNER AUTOMATIQUEMENT UN VÉHICULE DANS UN MODE DE CONDUITE AUTONOME NE NÉCESSITANT AUCUNE INTERVENTION DU CONDUCTEUR

(30) Priorität: 10.10.2009 DE 102009048954
(43) Veröffentlichungstag der Anmeldung: 15.08.2012
(73) Patentinhaber: Daimler AG, 70327 Stuttgart (DE)
(72) Erfinder: BÖHRINGER, Michael, 73730 Esslingen (DE); DUBIELLA, Stefanie, 71139 Ehningen (DE); JANSEN, Stefan, 75177 Pforzheim (DE); LOCKHART, Julie, 94041 Mountain View (US); SENGEWALD, Erik, 07747 Jena (DE); STIEBERT, Fabian, 71034 Dagersheim (DE)
(74) Vertreter: JENSEN & SON
(86) Internationale Anmeldenummer: PCT/EP2010/006079
(87) Internationale Veröffentlichungsnummer: WO 2011/042160

(56) Entgegenhaltungen:
- DE-A1-102004 037 231
- US-A1- 2007 198 145

## Beschreibung

Die Erfindung betrifft ein Verfahren und eine Vorrichtung zum automatischen Betreiben eines Fahrzeugs in einem keine Nutzeraktion erfordernden autonomen Fahrbetrieb.

Verfahren zum Betreiben eines Kraftfahrzeugs mit Unterstützung eines Assistenzsystems sowie selbige Systeme sind bekannt. Es kann sich dabei um Regelungen für eine Längsdynamik und/oder eine Querdynamik des Kraftfahrzeugs handeln, die im Falle eines Fahrfehlers und/oder einer Unaufmerksamkeit eines Fahrers des Fahrzeugs unterstützend eingreifen. Es sind Systeme bekannt, die einen Abstand zu einem vorausfahrenden Objekt einstellen. Ferner sind Assistenzsysteme bekannt, die einen Lenkeingriff durchführen, falls der Fahrer unbeabsichtigt eine Fahrspur verlässt bzw. ohne einen Eingriff verlassen würde.

Aus der DE 10 2009 010 006 A1 sind ein Verfahren und eine Vorrichtung zum teilautonomen oder autonomen Fahren eines Fahrzeugs bekannt, bei denen ein Fahrerassistenzsystem diejenigen Fahrfunktionen eines Fahrers des Fahrzeugs übernimmt, von denen festgestellt worden ist, dass der Fahrer diese Fahrfunktionen an das Fahrerassistenzsystem übergeben möchte. Ein Fahrereingriff in ein Fahrgeschehen während einer teilautonomen oder autonomen Fahrt übersteuert eine entsprechende Fahrerassistenzfunktion des Fahrerassistenzsystems.

Aus der DE 11 2006 002 892 T5 sind ein System und ein Verfahren zum Umschalten zwischen autonomer und manueller Bedienung eines Fahrzeugs bekannt, bei denen durch eine Humanschnittstelle Vorgänge eines Umschaltens zwischen autonomen und manuellen Bedienungen eines Fahrzeugs erleichtert und eine Bedienbarkeit und eine Sicherheit einer Fahrzeugverwendung bei autonomer und manueller Bedienung des Fahrzeugs verbessert werden.

Aufgabe der Erfindung ist es, ein Verfahren und eine Vorrichtung zum automatischen Betreiben eines Fahrzeugs in einem keine Nutzeraktion erfordernden autonomen Fahrbetrieb zu schaffen, bei denen ein Nutzer einen hohen Freiheitsgrad bezüglich Tätigkeiten während des autonomen Fahrbetriebs hat.

Diese Aufgabe wird hinsichtlich des Verfahrens mit den in Anspruch 1 und hinsichtlich der Vorrichtung mit den in Anspruch 8 angegebenen Maßnahmen gelöst.

Weitere vorteilhafte Ausgestaltungen der vorliegenden Erfindung sind Gegenstand der abhängigen Ansprüche.

Genauer gesagt weist ein Verfahren zum automatischen Betreiben eines Fahrzeugs in einem keine Nutzeraktion erfordernden autonomen Fahrbetrieb ein Erfassen einer vorliegenden Verkehrssituation, ein Prüfen, ob die Verkehrssituation ein erstes Kriterium erfüllt, und ein Sperren einer Funktionalität auf, die einem Fahrer während des autonomen Fahrbetriebs eine Nebentätigkeit anbietet, die sich nicht auf einen Fahrbetrieb des Fahrzeugs bezieht, falls das erste Kriterium erfüllt ist.

Unter autonomem Fahrbetrieb wird hierbei das selbständige, von Assistenzsystemen unterstützte Fahren eines Fahrzeugs ohne steuernden Eingriff des Nutzers verstanden. Assistenzsysteme übernehmen hierbei das Steuern der Längs- und Querdynamik des Fahrzeugs, also z.B. autonom Beschleunigungs-, Brems- und/oder Lenkvorgänge.

Dadurch wird der Vorteil erzielt, dass dem Nutzer verschiedene Angebote unterbreitet werden können, die zum Beispiel ein Lesen einer elektronischen Zeitung o.ä. beinhalten können. Obgleich Nebentätigkeiten bezüglich dieser Angebote während des autonomen Fahrbetriebs für den Nutzer durchführbar sind und er demgemäß einen hohen Freiheitsgrad bezüglich dieser Nebentätigkeiten hat, wird eine Sicherheit während einer Fahrt des Fahrzeugs dadurch gewährleistet oder sogar erhöht, dass bei Vorliegen einer vorbestimmten Verkehrssituation eine Funktionalität gesperrt wird, die einem Fahrer während des autonomen Fahrbetriebs eine Nebentätigkeit anbietet, die sich nicht auf einen Fahrbetrieb des Fahrzeugs bezieht, da dadurch die Aufmerksamkeit des Nutzers auf den eigentlichen Fahrbetrieb gerichtet wird.

Vorzugsweise weist das Verfahren ein Prüfen, ob die Verkehrssituation ein zweites Kriterium erfüllt, und ein Bereitstellen oder Signalisieren einer Bedienmöglichkeit für einen Fahrer des Fahrzeugs zum Aktivieren des autonomen Fahrbetriebs auf, falls die Verkehrssituation das zweite Kriterium erfüllt.

Dadurch wird der Vorteil erzielt, dass der Nutzer einen autonomen Fahrbetrieb lediglich in einer Verkehrssituation einleiten kann, die für den autonomen Fahrbetrieb zweckmäßig ist.

Vorzugsweise weist das Verfahren ein Prüfen zumindest eines Warnkriteriums während des autonomen Fahrbetriebs auf.

Vorzugsweise weist das Verfahren ein Warnen des Fahrers auf, falls das zumindest eine Warnkriterium erfüllt ist.

Vorzugsweise weist bei dem Verfahren das Warnkriterium mehrere Warnkriterien auf und weist das Warnen ein mehrstufiges Warnen des Fahrers auf der Grundlage der mehreren Warnkriterien auf.

Vorzugsweise ist bei dem Verfahren die Verkehrssituation ein Stau.

Staus werden von Nutzern von Fahrzeugen als zeitraubend und lästig empfunden. In einer derartigen als lästig empfundenen Verkehrssituation kann der Nutzer durch den autonomen Fahrbetrieb von einer Bedienung des Fahrzeugs befreit werden.

Weiterhin weist genauer gesagt weist eine Vorrichtung zum automatischen Betreiben eines Fahrzeugs in einem keine Nutzeraktion erfordernden autonomen Fahrbetrieb eine Erfassungseinrichtung zum Erfassen einer vorliegenden Verkehrssituation, eine Prüfeinrichtung zum Prüfen, ob die Verkehrssituation ein erstes Kriterium erfüllt, und eine Sperreinrichtung zum Sperren einer Funktionalität auf, die einem Fahrer während des autonomen Fahrbetriebs eine Nebentätigkeit anbietet, die sich nicht auf einen Fahrbetrieb des Fahrzeugs bezieht, falls das erste Kriterium erfüllt ist.

Dadurch wird der Vorteil erzielt, dass dem Nutzer verschiedene Angebote unterbreitet werden können, die zum Beispiel ein Lesen einer elektronischen Zeitung o.ä. beinhalten können. Obgleich Nebentätigkeiten bezüglich dieser Angebote während des autonomen Fahrbetriebs für den Nutzer durchführbar sind und er demgemäß einen hohen Freiheitsgrad bezüglich dieser Nebentätigkeiten hat, wird eine Sicherheit während einer Fahrt des Fahrzeugs dadurch gewährleistet oder sogar erhöht, dass bei Vorliegen einer vorbestimmten Verkehrssituation eine Funktionalität gesperrt wird, die einem Fahrer während des autonomen Fahrbetriebs eine Nebentätigkeit anbietet, die sich nicht auf einen Fahrbetrieb des Fahrzeugs bezieht, da dadurch die Aufmerksamkeit des Nutzers auf den eigentlichen Fahrbetrieb gerichtet wird.

Vorzugsweise prüft bei der Vorrichtung die Prüfeinrichtung, ob die Verkehrssituation ein zweites Kriterium erfüllt, und ist eine Einrichtung zum Bereitstellen oder Signalisieren einer Bedienmöglichkeit für einen Fahrer des Fahrzeugs zum Aktivieren des autonomen Fahrbetriebs, falls die Verkehrssituation das zweite Kriterium erfüllt, vorgesehen.

Dadurch wird der Vorteil erzielt, dass der Nutzer einen autonomen Fahrbetrieb lediglich in einer Verkehrssituation einleiten kann, die für den autonomen Fahrbetrieb zweckmäßig ist.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen. Es zeigen:
- Fig. 1: eine schematische Ansicht einer Mensch-/Maschinenschnittstelle eines Fahrzeugs mit einem Assistenzsystem;
- Fig. 2: ein Schema einer Zustandslogik zwischen einem freien Fahren und einem autonomen Fahren mittels des Assistenzsystems;
- Fig. 3: eine weitere schematische Ansicht einer Zustandslogik, wobei verschiedene Warnstufen zum Zurückführen einer Aufmerksamkeit des Fahrers auf das Verkehrsgeschehen vorgesehen sind;
- Fig. 4: eine weitere Zustandslogik, wobei keine Warnstufen vorgesehen sind; und
- Fig. 5: eine schematische Ansicht einer Anzeige der in Figur 1 dargestellten Mensch-/Maschinenschnittstelle zum Anbieten von Nebentätigkeiten während eines aktiven autonomen Fahrens des Fahrzeugs mittels des Assistenzsystems.

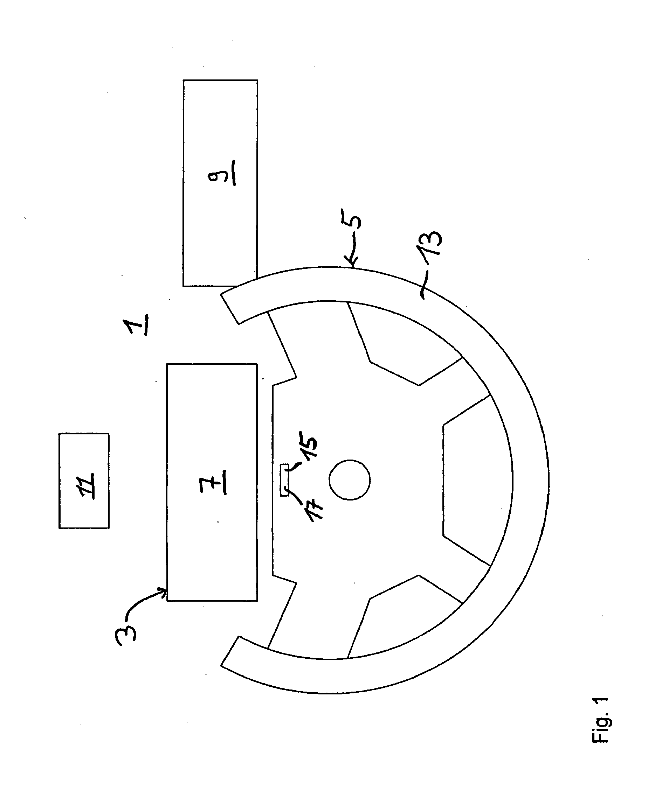

Figur 1 zeigt ein teilweise dargestelltes Kraftfahrzeug 1, das mit einem ebenfalls nur teilweise dargestellten Assistenzsystem 3 ausgestattet ist. Figur 1 zeigt eine schematische Ansicht einer ebenfalls nur teilweise dargestellten Mensch-/Maschinenschnittstelle 5 zum Fahren des Kraftfahrzeugs 1. Weitere Bedienelemente, wie Blinkstockhebel, Gangwahlhebel sowie Pedalmodul und/oder andere sind in Figur 1 nicht dargestellt. Das Assistenzsystem 3 weist eine Stauassistenzanzeige 7 auf, mittels der Funktionen des Assistenzsystems 3 symbolisiert und/oder durchgeführt werden können. Ferner weist die Mensch-/Maschinenschnittstelle 5 eine zentrale Anzeigeeinheit 9 sowie eine Einspiegelungsanzeige 11 auf. Die zentrale Anzeigeeinheit 9 kann beispielsweise als LCD-Display ausgeführt sein. Ebenso kann die Stauassistenzanzeige 7 als LCD-Display ausgeführt sein. Gegebenenfalls können die Stauassistenzanzeigeeinheit 7 und/oder die zentrale Anzeigeeinheit 9 als berührungssensitive Anzeigeeinheiten ausgeführt sein, bei denen mittels Berührungen Eingabebefehle erteilt werden können. Die Einspiegelungsanzeigeeinheit 11 kann mittels geeigneter Projektionsmittel auf eine vor der Mensch-/Maschinenschnittstelle 5 liegende Windschutzscheibe projiziert werden.

Zum Eingeben von Lenkbefehlen weist die Mensch-/Maschinenschnittstelle 5 ein Lenkrad 13 auf. Alternativ ist es denkbar, das Lenkrad 13 durch andere Eingabemittel, beispielsweise einen Joystick, zu ersetzen und/oder zu ergänzen.

Das Lenkrad 13 weist ein Bedienelement 15 in Form eines Tasters auf. Das Bedienelement 15 ist mit einem optischen Signalgeber 17 versehen, so dass das Bedienelement 15 in zumindest einer Farbe ein optisches Signal an den Fahrer des Kraftfahrzeugs 1 aussenden kann.

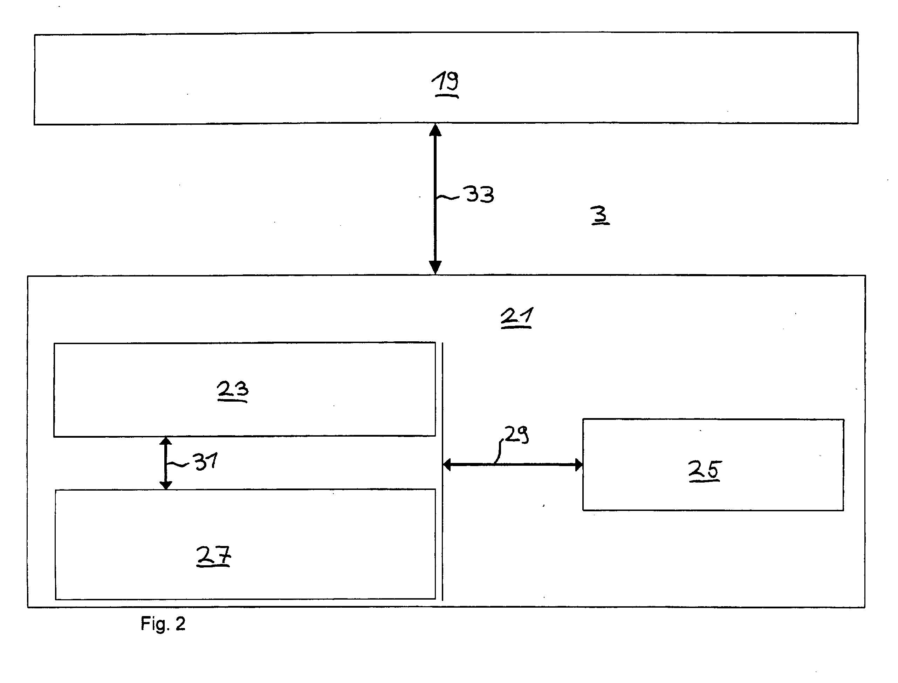

Figur 2 zeigt eine Zustandslogik des in Figur 1 gezeigten Kraftfahrzeugs 1 mit dem Assistenzsystem 3 und der Mensch-/Maschinenschnittstelle 5. Die in Figur 2 gezeigte Zustandslogik weist im Grundsatz einen ersten Zustand 19 für freies Fahren sowie einen zweiten Zustand für ein autonomes Fahren mittels des Assistenzsystems 3 auf. Bei dem ersten Zustand 19 bedient der Fahrer des Kraftfahrzeugs 1 die Mensch-/Maschinenschnittstelle 5, gibt also im Wesentlichen sämtliche Fahrbefehle über die Mensch-/Maschinenschnittstelle 5 selbst ein. Bei dem zweiten Zustand 21 des autonomen Fahrens ist das Assistenzsystem 3 aktiv und übernimmt zumindest teilweise eine Steuerung einer Längsdynamik und einer Querdynamik des Kraftfahrzeugs 1, nimmt also autonom Beschleunigungs-, Brems- und/oder Lenkvorgänge vor. Der zweite Zustand 21 des autonomen Fahrens unterteilt sich in einen dritten Zustand 23 eines aktiven autonomen Fahrens, einen vierten Zustand 25 eines passiven autonomen Fahrens sowie einen fünften Zustand 27 eines Warnens des Fahrers. Während des fünften Zustands 27 des Warnens des Fahrers kann der dritte Zustand 23 noch vorherrschen. Alternativ ist es denkbar, dass während des fünften Zustands 27 des Warnens das Assistenzsystem 3 in den vierten Zustand 25 des passiven autonomen Fahrens wechselt.

Während des vierten Zustands 25 des passiven autonomen Fahrens kann sich das Assistenzsystem 3 gänzlich im Hintergrund halten. Als Kriterium für einen Übergang von dem dritten Zustand 23 und gegebenenfalls dem fünften Zustand 27 in den vierten Zustand 25 und wieder zurück kann ein Fahrerübersteuern 29 überwacht werden. Unter Fahrerübersteuern 29 kann ein manuelles Bedienen der Mensch-/Maschinenschnittstelle 5 durch den Fahrer des Kraftfahrzeuges 1 verstanden werden. Falls das Fahrerübersteuern 29 vorliegt, wird in den vierten Zustand 25 gewechselt. Falls das Fahrerübersteuern 29 nicht mehr vorliegt, also beispielsweise der Fahrer des Kraftfahrzeugs 1 das Lenkrad 13 der Mensch-/Maschinenschnittstelle 5 loslässt, wird wieder in den dritten Zustand 23 zurück gewechselt.

Während des vierten Zustands 25 ist es denkbar, dass das Assistenzsystem 3 den Fahrer des Kraftfahrzeugs 1 dahingehend unterstützt, dass dieses nur dann eingreift, falls sich durch die Eingaben des Fahrers gefährliche Situationen ergeben, beispielsweise die Gefahr droht, dass eine Fahrspur unbeabsichtigt verlassen wird und/oder ein Auffahren auf ein vor dem Kraftfahrzeug 1 fahrendes Objekt gegeben ist. In diesem Fall kann das Fahrerübersteuern 29 ignoriert werden und das Assistenzsystem 3 entsprechend die Längs- und/oder Querdynamik des Kraftfahrzeuges 1 zur Vermeidung der Gefahrensituation korrigieren. Alternativ ist es denkbar, das Assistenzsystem 3 noch passiver auszulegen und gegebenenfalls trotz einer möglicherweise durchgeführten Erkennung einer Gefahrensituation das Fährerübersteuern 29 höher zu bewerten, also beispielsweise eine Kollision zuzulassen oder diese nur abzumildern.

Während des dritten Zustands 23 findet eine hundertprozentige Unterstützung des Fahrers des Kraftfahrzeugs 1 durch ein komplett autonomes Steuern der Längs- und Querdynamik des Kraftfahrzeugs 1 statt. Dabei ist es vorteilhaft möglich, dass der Fahrer des Kraftfahrzeugs 1 seine komplette Aufmerksamkeit anderen Dingen, also nicht dem Straßenverkehr, zuwendet. Dazu kann das Assistenzsystem 3, beispielsweise mittels der Stauassistenzanzeigeeinheit 7, Nebentätigkeiten anbieten bzw. freigeben. Unter Nebentätigkeiten kann beispielsweise das Lesen von Informationen, das durch Suchen eines weltumspannenden Datennetzes, das Durchführen einer schriftlichen und/oder mündlichen Kommunikation und/oder ähnliches verstanden werden.

Für einen Wechsel zwischen dem dritten Zustand 23 und dem fünften Zustand 27 bzw. für ein zusätzliches Aktivieren des fünften Zustands 27 kann zumindest ein Warnkriterium 31 abgeprüft werden. Falls das Warnkriterium 31 vorliegt, kann von dem dritten Zustand 23 in den fünften Zustand 27 gewechselt werden. Bei dem Warnkriterium 31 kann es sich beispielsweise um einen sich auflösenden Stau handeln, wobei ein Abschalten des Assistenzsystems 3 bevorsteht, so dass mittels des fünften Zustands 27 vorteilhaft die Aufmerksamkeit des Fahrers durch die entsprechenden Warnungen wieder auf die Verkehrslage zurückgeführt werden kann. Außerdem können in dem fünften Zustand 27 die während des dritten Zustands 23 angebotenen Nebentätigkeiten blockiert werden, so dass die Fahreraufmerksamkeit schnellstmöglich auf die Verkehrslage zurückgeführt werden kann. Das Blockieren kann auf der Grundlage eines Erfüllens eines bestimmten Kriteriums bezüglich einer Verkehrssituation, wie zum Beispiel eines Erfüllens eines Kriteriums "Stau löst sich auf", durchgeführt werden, um die Aufmerksamkeit des Fahrers zurück auf das Verkehrsgeschehen zu lenken.

Für einen Wechsel zwischen dem ersten Zustand 19 des freien Fahrens und dem zweiten Zustand 21 des autonomen Fahrens kann ein Kriterium 33 abgeprüft werden. Bei dem Kriterium 33 kann es sich beispielsweise um einen erkannten Verkehrsstau handeln. Falls das Kriterium 33 erfüllt ist, kann dies mittels des in Figur 1 dargestellten optischen Signalgebers 17 des Bedienelements 15 signalisiert werden. Zusätzlich wird das Bedienelement 15 freigegeben, so dass der Fahrer des Kraftfahrzeugs 1 mittels einer Bedienung des Bedienelements 15 von dem ersten Zustand 19 in den zweiten Zustand 21 wechseln kann. Vorteilhaft wird das autonome Fahren des zweiten Zustands 21 nur nach einer manuellen Betätigung des Bedienelements 15 durchgeführt, so dass vorteilhaft der Fahrer des Kraftfahrzeugs 1 von einer plötzlichen Übernahme des Assistenzsystems 3 nicht überrascht werden kann. Vielmehr behält dieser stets die Kontrolle darüber, wann und ob von dem ersten Zustand 19 in den zweiten Zustand 21 gewechselt werden soll. Mittels des Kriteriums 33 wird lediglich sichergestellt, dass dies nur dann geschehen kann, wenn auch das Assistenzsystem 3 eine passende Verkehrssituation zum aktiven oder passiven autonomen Fahren vorfindet, insbesondere eine gestaute Verkehrslage.

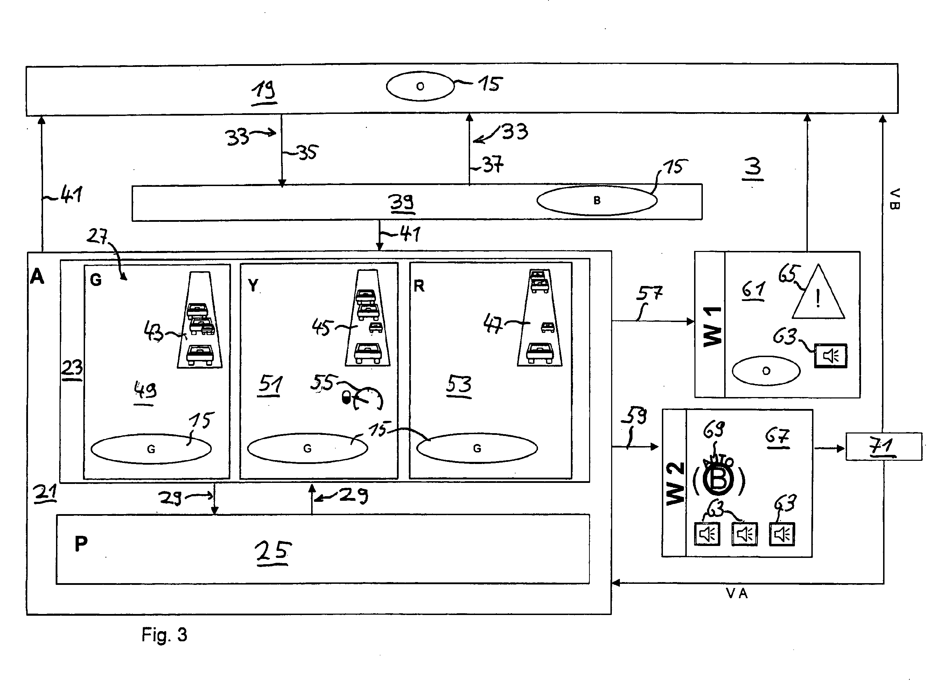

Figur 3 zeigt eine detailliertere Darstellung einer Zustandslogik des Assistenzsystems 3 des Kraftfahrzeugs 1 bzw. der Mensch-/Maschinenschnittstelle 5 des Kraftfahrzeugs 1. Mittels Ovalen ist an mehreren Stellen ein Zustand des optischen Signalgebers 17 des Bedienelements 15 symbolisiert. Der optische Signalgeber 17 kann zumindest drei Zustände annehmen, wobei mittels G ein grünes Leuchten, mittels B ein blaues Leuchten und mittels O ein Leuchten in einer beliebigen anderen Farbe oder ein Nichtleuchten symbolisiert sind. O ist dabei gleichbedeutend für den ersten Zustand 19. B ist gleichbedeutend mit dem ersten Zustand 19, wobei jedoch signalisiert wird, dass mittels einer Bedienung des Bedienelements 15 in den zweiten Zustand 21 des autonomen Fahrens gewechselt werden kann, was in Figur 3 mittels des Buchstabens A für Angeschaltet zusätzlich symbolisiert ist.

Das Kriterium 33 ist aufgeteilt in ein Bereitstellungskriterium 35 und ein Nichtbereitstellungskriterium 37. Falls das Bereitstellungskriterium 35 des Kriteriums 33 erfüllt ist, wechselt das Assistenzsystem 3 in einen sechsten Zustand 39, bei dem der optische Signalgeber 17 des Bedienelements 15 blau leuchtet und das Assistenzsystem 3 damit für eine manuelle Bedienung durch den Fahrer des Kraftfahrzeugs 1 verfügbar ist und als verfügbar signalisiert ist. Für den Fall, dass sich das Assistenzsystem 3 in dem sechsten Zustand 39 befindet, führt eine Betätigung 41 des Bedienelements 15 in den zweiten Zustand 21 des autonomen Fahrens. Eine weitere Betätigung 41 des Bedienelements 15 führt dementsprechend wieder zurück in den ersten Zustand 19 des freien Fahrens. Sobald der zweite Zustand 21 des autonomen Fahrens mittels der Betätigung 41 durch den Fahrer des Kraftfahrzeugs 1 eingeleitet wurde, wechselt das Assistenzsystem 3 in den dritten Zustand 23 des aktiven autonomen Fahrens. Während des dritten Zustands 23 des aktiven autonomen Fahrens werden zyklisch ein erstes Informationswarnkriterium 43, ein zweites Informationswarnkriterium 45 sowie ein drittes Informationswarnkriterium 47 abgeprüft. Entsprechend einem Vorliegen der Informationswarnkriterien 43 bis 47 wechselt das Assistenzsystem bei dem dritten Zustand 23 in einen siebten Zustand 49 einer ersten Informationswarnung, einen achten Zustand 51 einer zweiten Informationswarnung und einen neunten Zustand 53 einer dritten Informationswarnung. Während des dritten Zustands 23 bzw. der Unterzustände 49 bis 53 leuchtet das Bedienelement 15 bzw. der optische Signalgeber 17 des Bedienelements 15 grün, um damit die Aktivität des Assistenzsystems 3 anzuzeigen.

Das erste Informationswarnkriterium 43 ist dann gegeben, falls eine Fahrzeuggeschwindigkeit des Kraftfahrzeugs 1 ≤ als 39 km/h und ein Abstand zu einem vorausfahrenden Objekt ≤ als 30 m ist. Entsprechend kann bei Vorliegen des ersten Informationswarnkriteriums 43, also in dem siebten Zustand 49, eine Informationswarnung an den Fahrer ausgegeben werden. Diese Informationswarnung kann beispielsweise mittels eines aufgehenden Fensters auf der Stauanzeigeeinheit 7 erfolgen. Ein entsprechender Inhalt des Fensters kann lauten "Der Stauassistent ist an! Automatisches Lenken, Bremsen, Beschleunigen aktiviert." Gleichzeitig leuchtet der optische Signalgeber 17 des Bedienelements 15 in grüner Farbe.

Der sechste Zustand 39, bei dem der optische Signalgeber 17 des Bedienelements 15 blau leuchtet, kann ebenfalls zusätzlich durch ein aufgehendes Fenster der Stauassistenzanzeigeeinheit 7 begleitet werden. Der Inhalt des Fensters lautet "Stauassistent verfügbar" plus graphische Symbolisierung des Bedienelements 15 verbunden mitdem Text "Aktiviert System."

Das zweite Informationskriterium 45 ist dann gegeben, falls die Fahrzeuggeschwindigkeit 40 km/h beträgt oder der Abstand zu dem vorausfahrenden Objekt größer als 30 m und ≤ als 45 m ist. Die Fahrgeschwindigkeit von 40 km/h kann nicht überschritten werden, da während des dritten Zustands ein auf 40 km/h eingestellter Geschwindigkeitsbegrenzer 55 des Assistenzsystems 3 aktiviert ist. Falls die vorausfahrenden Objekte eine höhere Geschwindigkeit verlangen, wird der Geschwindigkeitsbegrenzer 55 aktiv, begrenzt die Fahrgeschwindigkeit auf 40 km/h, wobei gleichzeitig das zweite Informationswarnkriterium 45 erfüllt ist. Während des achten Zustands 51 leuchtet der optische Signalgeber 17 des Bedienelements 15 grün und zeigt damit die Aktivität des Assistenzsystems 3 an. Eine entsprechende Warnung kann ebenfalls mittels eines aufgehenden Fensters der Stauassistenzanzeigeeinheit 7 gegeben werden. Der Inhalt des Fensters lautet "Veränderte Staubedingungen. Stauassistent weiterhin aktiv."

Das dritte Informationswarnkriterium 47 ist erfüllt, falls der Abstand des Kraftfahrzeug 1 zu dem vorausfahrenden Objekt größer als 45 m und ≤ als 50 m ist oder eine Anzahl vorausfahrender Objekte bzw. gestauter Fahrzeuge kleiner als drei ist. Für diesen neunten Zustand 53 kann ebenfalls eine entsprechende Warnung mittels eines aufgehenden Fensters in der Stauanzeigeeinheit 7 ausgegeben werden. Der Inhalt des Fensters lautet "Stauassistent könnte abschalten. Beachten Sie den Verkehr."

In Figur 3 sind die Zustände 49 bis 53 zusätzlich mit den Buchstaben G für grün, Y für gelb und R für rot symbolisiert. Dementsprechend können die aufgehenden Fenster der zugehörigen Warnmeldungen in der Stauanzeigeeinheit 7 in den Farben grün, gelb und rot dargestellt werden.

Für einen Wechsel zwischen dem vierten Zustand 25 und dem dritten Zustand 23 wird geprüft, ob die Fahrerübersteuerung 29 vorliegt oder nicht, was in Figur 3 mittels in zwei unterschiedliche Richtungen zeigende Pfeile symbolisiert ist, wobei ein Wechsel von dem dritten Zustand 23 in den vierten Zustand 25 stattfindet, falls die Fahrerübersteuerung 29 vorliegt und zurückgewechselt wird, falls die Fahrerübersteuerung 29 nicht mehr vorliegt. Während des zweiten Zustands 21 des autonomen Fahrens werden zyklisch ein erstes Warnkriterium 57 und ein zweites Warnkriterium 59 abgeprüft. Das erste Warnkriterium 57 ist erfüllt, falls der Abstand zu dem vorausfahrenden Objekt größer ist als ein Maximalabstand oder eine Erfassung des vorausfahrenden Objekts nicht mehr sicher möglich ist oder eine Erfassung einer von dem Fahrzeug befahrenen Fahrspur nicht mehr als sicher eingestuft wird. Falls das erste Warnkriterium 57 erfüllt ist, wechselt das Assistenzsystem 3 in einen Zustand 61 einer mit W1 in Figur 3 symbolisierten ersten Warnung. In dem zehnten Zustand 61 ist das Assistenzsystem 3 abgeschaltet, was einem mittels des optischen Signalgebers 17 des Bedienelements 15 signalisiert wird und in Figur 3 mit dem Buchstaben O symbolisiert ist. Dabei wird ein akustisches Signal 63, beispielsweise in Form eines einzelnen Pieptons von einem akustischen Signalgeber des Assistenzsystems 3 ausgegeben. Gleichzeitig erfolgt eine erste optische Warnung 65 in Form eines Dreiecks mit einem Ausrufezeichen. Die erste optische Warnung 65 wird auf der Stauassistenzanzeigeeinheit 7 dargestellt. Zusätzlich kann die erste optische Warnung 65 auf der Einspiegelungsanzeigeeinheit 11 und/oder der zentralen Anzeigeeinheit 9 dargestellt werden. Von dem zehnten Zustand 61 wechselt das Assistenzsystem 3 in den ersten Zustand 19 des freien Fahrens. Dazu muss der Fahrer die erste optische Warnung 65 berücksichtigen und selbst wieder die Mensch-/Maschinenschnittstelle 5 bedienen. Falls das zweite Warnkriterium 59 vorliegt, wechselt das Assistenzsystem 3 in einen elften Zustand 67 einer automatischen Stillstandsbremsung. Das zweite Warnkriterium 59 kann beispielsweise gegeben sein, falls der Fahrer des Kraftfahrzeugs 1 den zehnten Zustand 61 der ersten Warnung ignoriert. Während der automatischen Stillstandsbremsung des elften Zustands 67 wird eine zweite optische Warnung 69 in Form einer symbolisierten Bremstrommel und den Buchstaben Auto sowie einem B für Bremsung auf der Stauanzeigeeinheit 7 sowie der Einspiegelungseinheit 11 und gegebenenfalls der zentralen Anzeigeeinheit 9 wiedergegeben. Zusätzlich wird das akustische Signal 63 wiederholt und gegebenenfalls lauter wiedergegeben. Nach der durchgeführten automatischen Stillstandsbremsung des elften Zustands 67 befindet sich das Assistenzsystem 3 in einem zwölften Zustand 71, wobei das Kraftfahrzeug 1 stillsteht, also eine Fahrgeschwindigkeit von 0 km/h aufweist. Entsprechend einer ersten Variante des Assistenzsystems 3 wechselt dieses von dem zwölften Zustand 71 zurück in den zweiten Zustand 21 des autonomen Fahrens des Kraftfahrzeugs 1, was in Figur 3 mittels den Buchstaben VA symbolisiert ist. Gemäß einer zweiten Alternative, die in Figur 3 mittels den Buchstaben VB symbolisiert ist, wechselt das Assistenzsystem 3 von dem zwölften Zustand 71 zurück in den ersten Zustand 19 des freien Fahrens, wobei der Fahrer des Kraftfahrzeugs 1 wieder selbst das Fahren des Kraftfahrzeugs 1 übernehmen muss.

Während des vierten Zustands 25 eines passiven autonomen Fahrens, der in Figur 3 zusätzlich mittels P symbolisiert ist, kann ebenfalls ein aufgehendes Fenster in der Stauanzeigeeinheit 7 angezeigt werden. Der Text lautet "Passiv durch" plus Symbolisierung des Bedienelements 15 zusammen mit dem Text "Systemabschaltung möglich". Während des ersten Zustands 19 des freien Fahrens kann die Stauassistenzanzeigeeinheit 7 abgeschaltet, also ein schwarzes Display anzeigen.

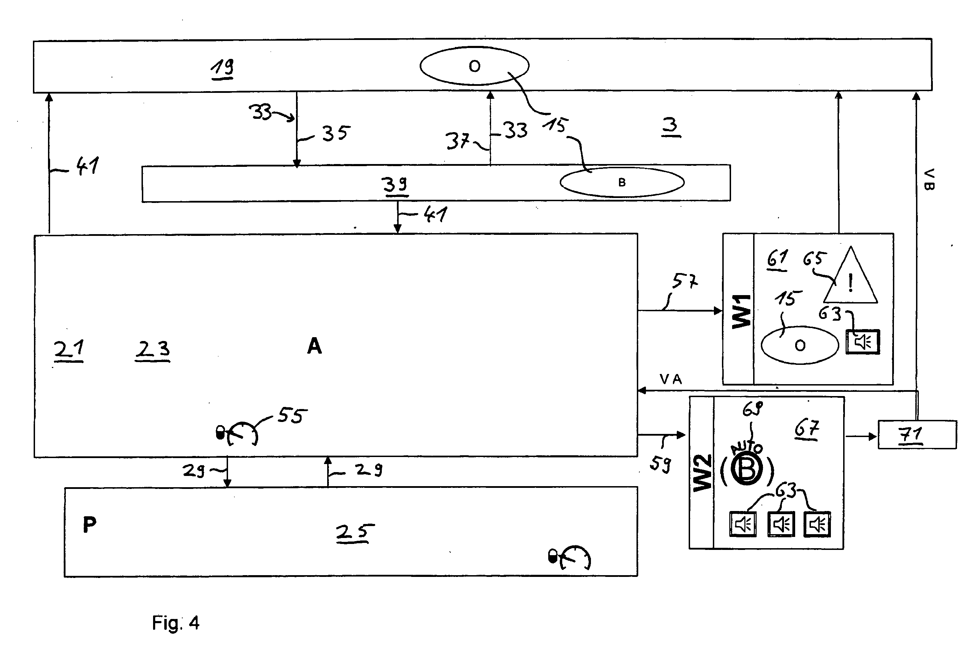

Figur 4 zeigt eine weitere Zustandslogik eines Assistenzsystems 3 analog der in Figur 3 dargestellten Zustandslogik.

Im Unterschied zur Darstellung gemäß der Figur 3 wird lediglich das Fahrerübersteuern 29 abgeprüft. Außerdem ist während des dritten Zustands 23 und des vierten Zustands 25 jeweils der Geschwindigkeitsbegrenzer 55 aktiv, beispielsweise bei 40 km/h.

Das Bereitstellungskriterium 35 ist gegeben, falls die Fahrzeuggeschwindigkeit des Kraftfahrzeug 1 ≤ als 30 km/h und der Abstand zu dem vorausfahrenden Objekt ≤ als 30 m und eine Objekterfassung gegeben ist und eine Fahrspurerfassung plausibel ist. Das Nichtbereitstellungskriterium 37 ist erfüllt, falls die Fahrgeschwindigkeit größer als 30 km/h oder der Abstand größer als 30 m oder die Objekterfassung nicht gegeben ist oder die Fahrspurerfassung nicht plausibel ist.

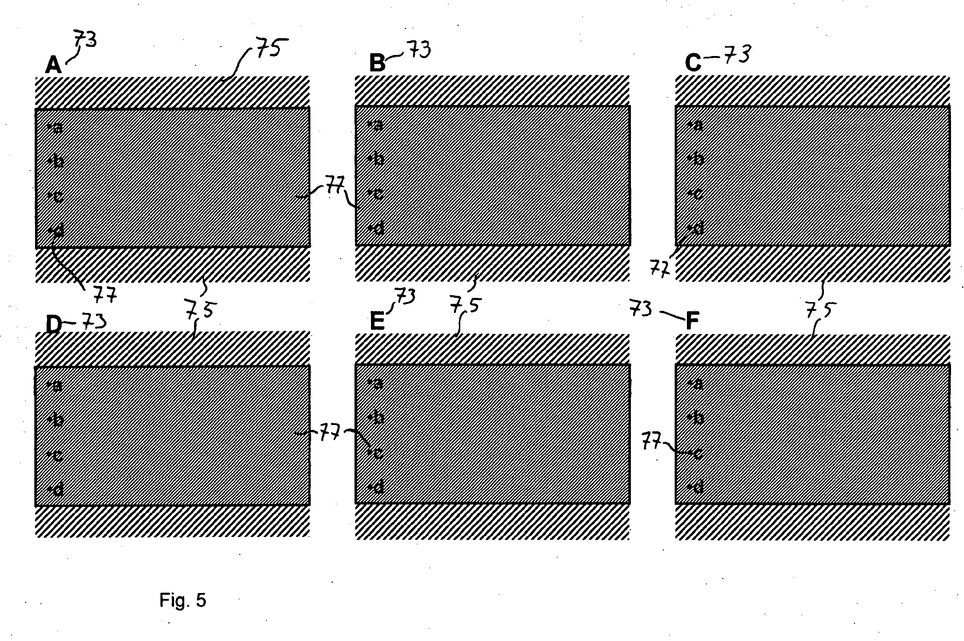

Figur 5 zeigt eine schematisierte Ansicht der Stauassistenzanzeigeeinheit 7 der Mensch-/Maschinenschnittstelle 5 des in Figur 1 gezeigten Assistenzsystems 3 während einer Staufahrt, also während das Assistenzsystem 3 aktiviert ist. Die in Figur 5 gezeigte Ansicht der Stauassistenzanzeigeeinheit 7 kann dem Fahrer des Kraftfahrzeugs 1 während einer Staufahrt zum Anbieten der Nebentätigkeiten angezeigt werden. Mittels den Großbuchstaben A,B,C,D,E,F sind insgesamt sechs verschiedene Arten von Nebentätigkeiten anbietbar, wobei jeder der Großbuchstaben A-F einen Überschriftsbereich symbolisiert. Die Überschriften können beispielsweise Büroarbeiten, Einkaufen, Verkehrslageübersicht, Information und Unterhaltung, Gesundheit und Wohlfühlen und Unterhaltung lauten. Jeweils unterhalb der Überschriften 73 sind Bildbereiche 75 angeordnet, die zu den Überschriften 73 A-F passende Bilder aufweisen können. Den Bildbereichen 75 überlagert sind Unterüberschriften 77 bzw. entsprechende rechteckige Bereiche der Unterüberschriften 77, die jeweils mit den Kleinbuchstaben a,b,c,d gekennzeichnet sind. Die Bereiche der Unterüberschriften 77, die in Figur 5 mittels einer feinen Schraffur symbolisiert sind, können halbtransparent dargestellt sein, wobei die Bilder der Bildbereiche 75, die mittels einer dicken Schraffur symbolisiert sind, halbtransparent durchscheinen können. Die Unterüberschriften können beispielsweise Dokumente ansehen, Sprachnachrichten, Börsendurchsicht, E-Mail oder elektronische Shops oder Straßenkarte, Verkehrsbericht; Vogelperspektive oder Kaffeemaschine, Zeitung, Hörbücher, Nachrichten des Fahrzeugherstellers oder Tagträume, mentale oder physische Übungen, Zustand ihres Körpers, Gesundheitstraining oder Filme, Fernsehen, Bilder, Spiele lauten. Vorteilhaft kann der Fahrer des Kraftfahrzeugs 1 bei der in Figur 5 gezeigten Ansicht der Stauassistenzanzeigeeinheit 7 aus den Überschriften 73 bzw. den entsprechenden Unterüberschriften 77 ein ihn interessierendes Thema auswählen. Dies kann mittels einer beliebigen Navigationsvorrichtung, beispielsweise durch Berühren der Stauassistenzanzeigeeinheit, ein Eingaberad, ein Eingaberad mit Kraftrückmeldung, ein kraftsensitiver Pin, ein Joystick und/oder Spracheingabe erfolgen.

Der zehnte Zustand 61 der ersten Warnung und der elfte Zustand 67 der autonomen Bremsung werden aufgehoben, sobald der Fahrer darauf reagiert, beispielsweise durch eine Eingabe an der Mensch-/Maschinenschnittstelle 5.

Es ist denkbar, bei einem Wechsel in den zweiten Zustand 21 des autonomen Fahrens, insbesondere des aktiven autonomen Fahrens eine Gestaltung der Mensch-Maschinen-Schnittstelle 5 zu verändern, beispielsweise eine Beleuchtung anzuschalten, eine Kaffeemaschine zugänglich zu machen oder ähnliches.

## Patentansprüche

1. Verfahren zum automatischen Betreiben eines Fahrzeugs (1) in einem keine Nutzeraktion erfordernden autonomen Fahrbetrieb, das aufweist:
Erfassen einer vorliegenden Verkehrssituation; und
Prüfen, ob die Verkehrssituation ein erstes Kriterium (31) erfüllt;
**gekennzeichnet durch**
Sperren einer Funktionalität, die einem Fahrer während des autonomen Fahrbetriebs eine Nebentätigkeit anbietet, die sich nicht auf einen Fahrbetrieb des Fahrzeugs (1) bezieht, falls das erste Kriterium (31) erfüllt ist.

2. Verfahren nach Anspruch 1, **gekennzeichnet durch**:
Prüfen, ob die Verkehrssituation ein zweites Kriterium (33) erfüllt; und
Bereitstellen oder Signalisieren einer Bedienmöglichkeit für einen Fahrer des Fahrzeugs (1) zum Aktivieren des autonomen Fahrbetriebs, falls die Verkehrssituation das zweite Kriterium (33) erfüllt.

3. Verfahren nach Anspruch 1 oder 2, **gekennzeichnet durch**:
Prüfen zumindest eines Warnkriteriums (43, 45, 47, 57, 59) während des autonomen Fahrbetriebs.

4. Verfahren nach Anspruch 3, **gekennzeichnet durch**:
Warnen des Fahrers, falls das zumindest eine Warnkriterium (43, 45, 47, 57, 59) erfüllt ist.

5. Verfahren nach Anspruch 3 oder 4, **dadurch gekennzeichnet, dass** das Warnkriterium mehrere Warnkriterien(43, 45, 47, 57, 59) aufweist und das Warnen ein mehrstufiges Warnen des Fahrers auf der Grundlage der mehreren Warnkriterien (43, 45, 47, 57, 59) aufweist.

6. Verfahren nach einem der Ansprüche 1 bis 5, **dadurch gekennzeichnet, dass** die Verkehrssituation ein Stau ist.

7. Vorrichtung zum automatischen Betreiben eines Fahrzeugs (1) in einem keine Nutzeraktion erfordernden autonomen Fahrbetrieb, die aufweist:
eine Erfassungseinrichtung zum Erfassen einer vorliegenden Verkehrssituation; und
eine Prüfeinrichtung zum Prüfen, ob die Verkehrssituation ein erstes Kriterium (31) erfüllt;
**gekennzeichnet durch**
eine Sperreinrichtung zum Sperren einer Funktionalität, die einem Fahrer während des autonomen Fahrbetriebs eine Nebentätigkeit anbietet, die sich nicht auf einen Fahrbetrieb des Fahrzeugs (1) bezieht, falls das erste Kriterium (31) erfüllt ist.

8. Vorrichtung nach Anspruch 7, **dadurch gekennzeichnet, dass**:
die Prüfeinrichtung prüft, ob die Verkehrssituation ein zweites Kriterium (33) erfüllt; und
eine Einrichtung zum Bereitstellen oder Signalisieren einer Bedienmöglichkeit für einen Fahrer des Fahrzeugs (1) zum Aktivieren des autonomen Fahrbetriebs, falls die Verkehrssituation das zweite Kriterium (33) erfüllt, vorgesehen ist.

## Claims

1. A method for automatically operating a vehicle (1) in an autonomous driving mode requiring no user action, comprising:
detecting the present traffic situation; and
checking whether the traffic situation fulfils a first criterion (31);
**characterised by**
shutting off a functionality which offers a driver, during the autonomous driving mode, a secondary activity not relating to a driving mode of the vehicle (1) if the first criterion (31) is fulfilled.

2. A method according to claim 1, **characterised by**:
checking whether the traffic situation fulfils a second criterion (33); and
providing or indicating a facility for a driver of the vehicle (1) to activate the autonomous driving mode if the traffic situation fulfils the second criterion (33).

3. A method according to claim 1 or 2, **characterised by**:
checking at least one warning criterion (43, 45, 47, 57, 59) during the autonomous driving mode.

4. A method according to claim 3, **characterised by**;
warning the driver if the at least one warning criterion (43, 45, 47, 57, 59) is fulfilled.

5. A method according to claim 3 or 4, **characterised in that** the warning criterion comprises a plurality of warning criteria (43, 45, 47, 57, 59) and the warning comprises a multi-stage warning of the driver on the basis of the plurality of warning criteria (43, 45, 47, 57, 59).

6. A method according to one of the claims 1 to 5, **characterised in that** the traffic situation is a traffic jam.

7. A device for automatic operation of a vehicle (1) in an autonomous drive mode requiring no user action, comprising:
a detection means to detect the present traffic situation; and a checking means to check whether the traffic situation fulfils a first criterion (31);
**characterised by**
a shut-off means to shut off a functionality offering a driver, during the autonomous driving mode, a secondary activity which does not relate to a driving mode of the vehicle (1) if the first criterion (31) is fulfilled.

8. A device according to claim 7, **characterised in that**
the checking means checks whether the traffic situation fulfils a second criterion (33); and
a means for providing or indicating a facility for a driver of the vehicle (1) to activate the autonomous driving mode if the traffic situation fulfils the second criterion (33) is provided.

## Revendications

1. Procédé pour faire fonctionner automatiquement un véhicule (1) dans un mode de conduite autonome qui ne nécessite aucune intervention du conducteur , qui consiste à : détecter une situation de circulation existante ; vérifier si ladite situation de circulation satisfait à un premier critère (31) ; **caractérisé par** le verrouillage d'une fonctionnalité qui offre au conducteur, pendant le mode de conduite autonome, la possibilité de s'adonner à une autre activité sans rapport avec un mode de conduite du véhicule (1), dans le cas où le premier critère (31) est satisfait.

2. Procédé selon la revendication 1, **caractérisé par** les étapes qui consistent à : vérifier si la situation de circulation satisfait un second critère (33) ; et mettre à disposition ou signaler une possibilité d'utilisation pour un conducteur du véhicule (1) d'activer le mode de conduite autonome, dans le cas où la situation de circulation satisfait au second critère (33).

3. Procédé selon la revendication 1 ou la revendication 2, **caractérisé par** l'étape qui consiste à : contrôler au moins un critère d'avertissement (43, 45, 47, 57, 59) pendant le mode de conduite autonome.

4. Procédé selon la revendication 3, **caractérisé par** l'étape qui consiste à : avertir le conducteur au cas où au moins un critère d'avertissement (43, 45, 47, 57, 59) soit satisfait.

5. Procédé selon la revendication 3 ou la revendication 4, **caractérisé en ce que** le critère d'avertissement consiste en plusieurs critères d'avertissement (43, 45, 47, 57, 59) et que l'avertissement consiste à avertir le conducteur en plusieurs étapes en fonction de plusieurs critères d'avertissement (43, 45, 47, 57, 59).

6. Procédé selon l'une quelconque des revendications 1 à 5, **caractérisé en ce que** la situation de circulation est un embouteillage.

7. Dispositif destiné à faire fonctionner automatiquement un véhicule (1) dans un mode de conduite autonome qui ne nécessite aucune intervention du conducteur , qui comprend : un dispositif de détection servant à détecter une situation de circulation existante ; un dispositif de contrôle servant à vérifier si ladite situation de circulation satisfait à un premier critère (31) ; **caractérisé par** un dispositif de verrouillage servant à verrouiller une fonctionnalité qui offre au conducteur, pendant le mode de conduite autonome, la possibilité de s'adonner à une autre activité sans rapport avec un mode de conduite du véhicule (1), dans le cas où le premier critère (31) soit satisfait.

8. Dispositif selon la revendication 7, **caractérisé en ce que** : le dispositif de contrôle vérifier si la situation de circulation satisfait à un second critère (33) ; un dispositif servant à mettre à disposition ou à signaler une possibilité d'utilisation pour un conducteur du véhicule (1) d'activer le mode de conduite autonome, dans le cas où la situation de circulation satisfait au second critère (33).
